Europäisches Patentamt

European Patent Office

Office européen des brevets

(19)

(11) Publication number: **0 174 169**
A2

# (12) EUROPEAN PATENT APPLICATION

(21) Application number: 85306169.5

(22) Date of filing: 30.08.85

(51) Int. Cl.⁴: **F 25 B 15/02**

(30) Priority: 06.09.84 IL 72882

(43) Date of publication of application:
12.03.86 Bulletin 86/11

(84) Designated Contracting States:
AT BE CH DE FR GB IT LI LU NL SE

(71) Applicant: BEN-GURION UNIVERSITY OF THE NEGEV
RESEARCH AND DEVELOPMENT AUTHORITY
P.O. Box 1025
Beer-Sheva(IL)

(72) Inventor: Yaron, Isaac

Deceased(IL)

(72) Inventor: Kimchi, Yigal
13 Montefiori Street
Raanana(IL)

(72) Inventor: Jelinek, Michael
20 Mivtza Kedem Street
Beer Sheva(IL)

(74) Representative: Marsh, Roy David et al,
Brewer & Son 5-9, Quality Court Chancery Lane
London WC2A 1HT(GB)

(54) **Absorption system for refrigeration and heat pumping.**

(57) There is provided an absorption system for refrigeration and heat pumping. The system includes generator means E in which refrigerant vapor is boiled off a strong solution, condenser means C in which the refrigerant vapor is condensed into liquid refrigerant, evaporator means E in which the liquid refrigerant is turned into refrigerant vapors, and absorber means A in which the refrigerant vapors are absorbed in a weak solution, turning it into a strong solution. There is further provided a liquid/gas jet pump means (2) incorporated into the strong solution/weak solution cycle of the system, at a point upstream of said absorber means, in which liquid/gas jet pump means, the weak solution from the generator means, flowing through the nozzle of the jet pump means, is used as motive fluid to draw into the pump, and intimately mix with, refrigerant vapor emerging from the evaporator means. The original pressure of the motive fluid, reduced during the passage of the latter through said nozzle, being at least partly recovered in a pressure-recovery member of the jet pump means.

Fig.3.

EP 0 174 169 A2

B&S No. C85/85

- 1 -

ABSORPTION SYSTEM FOR REFRIGERATION AND HEAT PUMPING

The present invention relates to improvements in absorption systems for refrigeration and heat pumping.

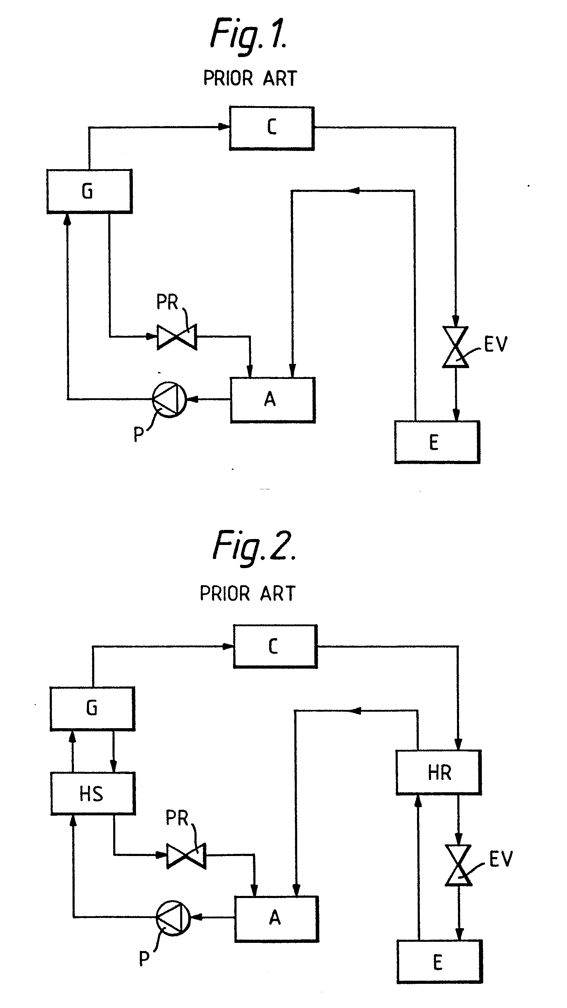

A conventional absorption system, as used in regrigeration and heat pump applications and schematically shown in Fig. 1, consists of four basic components: the generator G, the condenser C, the evaporator E, and the absorber A. The absorption cycle entails the following basic operations: a concentrated solution of a volatile regrigerant in a high-boiling absorbent, termed the strong solution, is heated in the generator. As a result of this, vapors of the regrigerant are evolved and the concentration of the solution reduces, leaving behind what is termed the weak solution. The refrigerant vapors are liquified in the condenser and the pure liquid refrigerant is then passed on to the evaporator. There it extracts heat from the surrounding medium and evaporates, causing the desired refrigerating effect. The vapors of the refrigerant so produced are returned to the cycle by absorption in the weak solution in the absorber.

In such absorption systems two sections are distinguished in terms of pressure levels - a zone of relatively high pressure, comprising the generator and the condenser, and a zone of relatively low pressure, comprising the evaporator and the absorber. The need to maintain two different pressure levels in a conventional absorption system is dicated by the commonly available means of external cooling, such as ambient air or water provided by cooling towers, with which it is possible to liquefy the pure refrigerant vapors in the condenser only at a relatively high pressure level, whereas in order to obtain the low temperatures required in the refrigerator, it is necessary to reduce the pressure of the liquid refrigerant to levels corresponding to the evaporator temperature. Reduction of the pressure of the liquid refrigerant is achieved in small absorption installations by throttling it through a capillary constriction and in larger ones by passage through an expansion valve (EV in Fig. 1). In both cases, as a result of pressure reduction, energy of the high-pressure liquid refrigerant is wasted. Since it is generally not feasible to compress the low-pressure refrigerant vapors prior to their absorption back to the high level, absorption itself is carried out in the absorber at the low pressure level, for which purpose the pressure of the weak solution exiting from the generator must also be reduced by suitable pressure - reducing means PR, again at the expense of a waste of its energy. The pressure level of the strong solution formed in the absorber must then be raised to that of the generator, requiring an appropriate input of electrical or mechanical energy to the solution circulation pump (P in Fig. 1).

Such a mode of operation of conventional absorption systems has, in addition to the waste of energy already mentioned, some other shortcomings, which may further impair the efficiency of their operation, and cause additional increase in their cost. Firstly, the absorption process in th absorber is less efficient at low pressure than at high pressure, meaning that a lesser amount of refrigerant vapor can be absorbed per unit mass of the weak solution at low pressure than at high pressure at the same conditions. As a result of this, the concentration of the strong solution emerging from the absorber will be lower at low absorber pressure than at high pressure, hence the span of the thermodynamic cycle of operation of the abosrption cycle will be narrower, its thermodynamic efficiency will be lower, and the circulation ratio, defined as the ratio of the mass flow rate of the solution to that of the refrigerant, will be higher. Secondly, as mentioned before, it is necessary to repump the strong solution from the low pressure level of the absorber back to the high pressure level of the generator. The pumping energy requirements of pump P are directly proportional to the pressure difference between the two pressure levels and to the circulation level. Obviously these pumping energy requirements will be larger when both the pressure difference and the circulation ratio are large. In extreme cases the energy consumption of the pump may be large to such an extent that it may cause the operation of the entire absorptin system to become economically infeasible, as a pump of such a performance is often prohibitively expensive for incorporation in an abosrption installation which must economically compete with alternative means for the production of refrigeration or heat pumping.

- 4 -

Furthermore, in practical absorption systems it is customary to achieve improvement of the overall efficiency of the system through heat exchange between the strong and the weak solutions in the so-called solution heat exchanger (HS in Fig. 2). The size of this heat exchanger is determined by the mass flow rates of the solutions passing through it. Obviously if the circulation rate is large, the size of this heat exchanger will also be large. The cost of the solution heat exchanger being proportional to its size, it may in some cases constitute an unduly high portion of the overall cost of the absorption system.

For the sake of completeness it is noted here that in practical absorption systems it is also customary to further achieve improvement in the efficiency of the system by incorporation of another heat exchanger (HR in Fig. 2), the purpose of which is to exchange heat between the liquid refrigerant entering the evaporator and the refrigerant vapors exiting it.

In absorption systems the efficient operation of the absorber is largely determined by the ability to intimately disperse the contacting phases, viz. the refrigerant vapors and the weak solution. The rate of absorption, the retention time of the phases in the absorber, and hence the actual size of the absorber necessary to ensure complete absorption of the vapors, will also depend on the extent to which one phase is successfully dispersed in the other one.

- 5 - 0174169

It is one of the objects of the present invention to largely eliminate the above explained drawbacks and shortcomings of the prior-art absorption systems and to increase the cost efficiency thereof by enhancing the dispersion, one into the other, of contacting phases, while greatly diminishing irreversible reduction of pressure inevitably associated with loss of energy.

This the invention achieves by providing an absorption system for refrigeration and heat pumping, including generator means in which refrigerant vapor is boiled off a strong solution, condenser meanss in which said refrigerant vapor is condensed into liquid refrigerant, evaporator means in which said liquid refrigerant is turned into refrigerant vapors, and absorber means in which said refrigerant vapors are absorbed in a weak solution, turning it into a strong solution, characterized by a liquid/gas jet pump means incorporated into the strong solution/weak solution cycle of said system, at a point upstream of said absorber means, in which liquid/gas jet pump means, the weak solution from said generator means, flowing through the nozzle of said jet pump means, is used as motive fluid to draw into said pump, and intimately mix with, refrigerant vapor emerging from said evaporator means, the original pressure of said motive fluid, reduced during the passage of the latter through said nozzle, being at least partly recovered in a pressure-recovery member of said jet pump means, whereby concentration of the refrigerant vapor in said strong solution is increased and the pressure difference between said absorber means and said generator means is held relatively low.

The invention further provides an absorption system for refrigeration and heat pumping, including generator means in which refrigerant vapor is boiled off a strong solution, condenser means in which said refrigerant vapor is condensed into liquid refrigerant, evaporator means in which said liquid refrigerant is turned into refrigerant vapors, and absorber means in which said refrigerant vapors are absorbed in a weak solution, turning it into a strong solution, characterized by a liquid/gas jet pump means, incorporated into the liquid refrigerant line of said system at a point upstream of said evaporator means, in which liquid/gas jet pump means the liquid refrigerant from said condenser means is used as motive fluid to draw into said pump, and intimately mix with, part of the refrigerant vapors produced in said evaporator means, the original pressure of said motive fluid, reduced during the passage of the latter through said nozzle, being at least partly recovered in a pressure-recovery member of said jet pump means, whereby the amount of refrigerant vapor to be produced in said generator means, to be liquefied in said condenser means and to be redissolved in said absorber means is reduced.

Still further provided by the invetnion is an absorption system for refrigeration and heat pumping including generator means in which refrigerant vapor is boiled off a strong solution, condenser means in which said refrigerant vapor is condensed into liquid refrigerant, evaporator means in which said liquid refrigerant is turned into refrigerant vapors, and absorber means in which said refrigerant vapors are absorbed in a weak solution, turning it into a strong solution, characterized by a first liquid/gas jet pump means, incorporated into the strong solution/weak solution cycle of said system at a point upstream of said absorber means, in which first liquid/gas jet pump means the weak solution from said generator means, flowing through the nozzle of said jet pump means, is used as motive fluid to draw into said pump, and intimately mix with, refrigerant vapor emerging from said evaporator means, the original pressure of said motive fluid, reduced during the passage of the latter through said nozzle, being at least partly recovered in a pressure-recovery member of said jet pump means, whereby concentration of the refrigerant vapor in said strong solution is increased and the pressure difference between said absorber means and said generator means is held relatively low, further comprising a second liquid jet pump means incorporated into the liquid refrigerant line of said system at a point upstream of said evaporator means, in which a second liquid/gas jet pump means the liquid refrigerant from said condenser means is used as motive fluid to draw into said pump, and intimately mix with, part of the refrigerant vapors produced in said evaporator means the original pressure of said motive fluid, reduced during the passage of the latter through said nozzle, being at least partly

0174169

- 8 -

recovered in a pressure-recovery member of said jet pump means, whereby the amount of refrigerant vapor to be produced in said generator means, to be liquefied in said condenser means and to be redissolved in said absorber means is reduced, and the performance of the first liquid/gas jet pump located upstream of said absorber means is enhanced.

The liquid/gas jet pumps proposed are of the per se known type in which one stream of fluid, generally termed the motive fluid, imparts momentum to another fluid. These liquid/gas jet pumps are simple in construction, do not contain moving parts, are relatively cheap in manufacture and maintenance, and do not require electrical or mechanical energy for their operation. In these pumps the motive fluid at a relatively high pressure passes through a nozzle consisting of one or more orifices, such that the velocity of the jet exiting from the nozzle is very high. The kinetic energy of the jet is obtained by conversion of the potential energy of the motive fluid, i.e., by reduction of its pressure. This effect is utilized in the mixing chamber, in which the second fluid is drawn in. With appropriate design of the jet pump it is possible to achieve a very fine dispersion of one fluid in the other in the mixing chamber. It is, however, possible to partly recover the original pressure of the motive fluid by converting part of the kinetic energy of the mixed fluid to pressure by attaching, to the mixing chamber, a pressure-recovering accessory, e.g. a diffusor. With a proper design of the jet pump, including such an accessory, it is possible to recover as much as about 60% of the pressure of the motive.

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:

Fig. 1 schematically illustrates the fundamental 0cycle of a conventional, prior-art absorption system for refrigeration and heat pumping;

0174169

- 10 -

Fig. 2 shows this prior-art system as realized in practice;

Fig. 3 illustrates a first embodiment of the system according to the invention, in which the jet pump is located upstream of the absorber, replacing the pressure-reducing means;

Fig. 4 represents a second embodiment of the invention, in which the jet pump is located upstream of the evaporator, replacing the expansion valve;

Fig. 5 shows a third embodiment of the invention, in which two jet pumps replace both the pressure-reducing means and the expansion valve;

Fig. 6 illustrates a two-stage arrangement incorporating the system according to the invention, and

Fig. 7 represents a double-effect installation utilizing the system according to the invention.

The basic improvement provided by the present invention and including the incorporation of a liquid-gas jet pump with a pressure-recovering accessory in a conventional absorption process for refrigeration and heat pumping applications is possible in two independent modes, each of which has its own benefits. It should be emphasized that these liquid/gas jet pumps may be incorporated in an absorption process for refrigeration and heat pumping applications in both modes simultaneously.

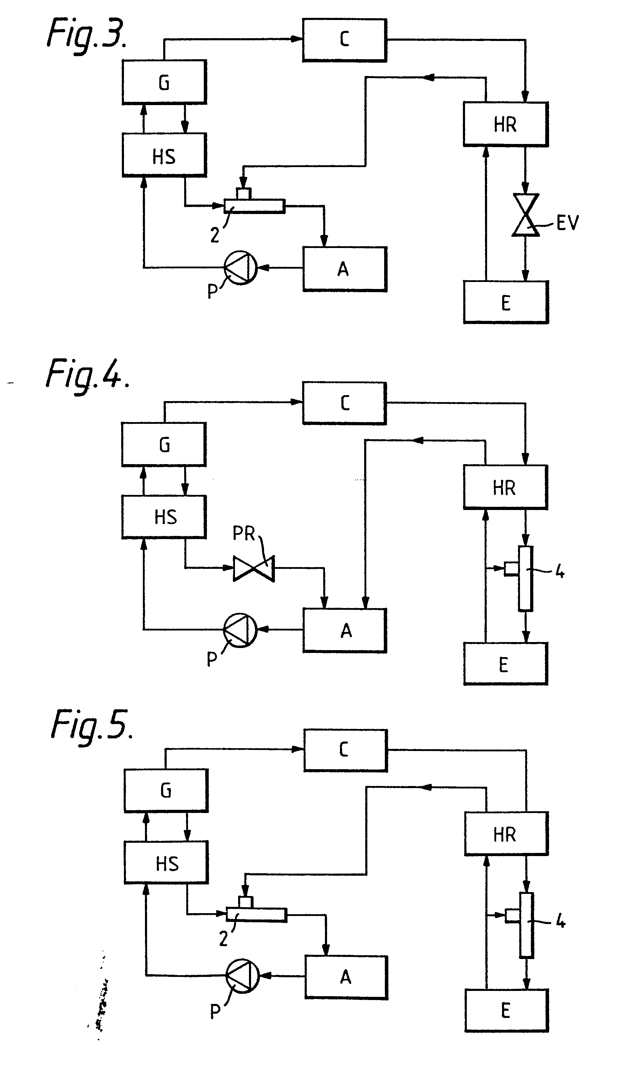

In the first mode, illustrated in Fig. 3, the liquid/gas jet pump 2 with a pressure-recovering accessory is installed at the inlet to, that is, upstream of, the absorber such, that the weak solution exiting from the generator G and the solution heat exchanger HS serves as the motive fluid. The nozzle of the jet pump is designed so that the pressure of the weak solution jet in the mixing chamber is reduced to the level of the pressure of the refrigerant vapors exiting from the evaporator E and the refrigerant heat exchanger HR. Since both fluids, i.e., the weak solution and the refrigerant vapors, flow at substantial velocities in contradistinction to ordinary liquid-gas jet pump applications, in which only the motive fluid possesses an appreciable velocity, the momentum exchanged between the two fluids in a properly designed mixing chamber is utilized mainly for the intimate dispersion of the refrigerant vapors in the form of very minute bubbles in the solution. Through adequate design of the post mixing - chamber section, the pressure of the two-phase mixture may be built up by conversion of its kinetic energy to pressure. Further deceleration of the two-phase mixture occurs in the course of partial absorption of the refrigerant vapors in the weak solution already in the jet pump itself, via the decrease in the volumetric flow rate of the mixture.

0174169

- 12 -

The balance of the refrigerant vapors is totally absorbed in the remaining solution within the absorber, now at a pressure higher than normally encountered in conventional absorption systems for refrigeration and heat pumping systems.

Such a mode of incorporation of a liquid-gas jet pump in an absorption system has the following advantages:

1) A better dispersion is obtained of the refrigerant vapors in the weak solution, which enhances the rate of mass transfer between the phases and speeds up the process of absorption.

2) The absorption process is carried out at a pressure higher than used in conventional systems, which results in a higher concentration of the refrigerant in the refrigerant – absorbent combination, in the broadening of the span of the thermodynamic cycle, and hence in the improvement of the cycle efficiency.

3) The pressure difference between the generator and the absorber decreases, which results in the decrease in size and cost of the solution pump and of its energy consumption requirements, and hence results in further improvement in proceeds efficiency and total costs.

4) The increase in the achievable concentration of the strong solution in the absorber leads to a corresponding decrease in the circulation ratio. This has a triple beneficial effect:

(a) The decrease in the mass flow rate of the strong solution further decreases the size, cost and energy requirements of the solution pump P.

(b) The size, and hence, the cost of the solution heat exchanger HS decreases, with consequent decrease in total costs.

(c) Since the strong solution is brought to boiling in the generator, the decrease in its mass flow rate also diminishes the amount of sensible heat required for its heating up to boiling in the generator, and thus leads to reduction in the heat load and size and cost of the generator.

All three effects improve system efficiency and the economics of the process.

5) Because absorption of refrigerant vapors in the weak solution already partially takes place in the jet pump, further reduction is possible in the size of the absorber, leading to additional decrease in costs and improvement in system efficiency.

In addition to the above advantages, another possible one deserves mention. Since the elevation of the pressure level in the absorber substantially broadens the span of the thermodynamic cycle, it is now possible to utilize to advantage the latent reserves of such a broadened cycle. Thus at the expense of a small increase in the concentration of the weak solution, i.e., of a slight narrowing of the broadened cycle at its low concentration edge, it is now possible to further elevate the pressure in the generator and the condenser and thus to permit the use of the cheaper ambient air cooling for condensation of refrigerant vapors instead of the more expensive cooling by means of water supplied by cooling towers. Conversely, by elevating the condensation pressure and thus increasing the temperature of the condensing vapors, it is possible, while still using cooling water, to substantially reduce the size of the condenser and its cost due to the higher temperature difference between the streams.

The second mode in which a liquid/gas jet pump 4 may be incorporated in a conventional absorption system is shown on Fig. 4. As can be seen in this embodiment, the jet pump 4 is installed at the inlet to, that is, upstream of, the evaporator in place of the capillary constriction or the expansion valve EV.

The liquid refrigerant exiting from the condenser at the high system pressure serves here as the motive fluid. Passing through the nozzle, its pressure is reduced to a level somewhat lower than that required in the evaporator. In the mixing chamber it mixes with a pat of the refrigerant vapors evolved in the evaporator. These will condense on the liquid jet, such that the refrigerant jet emerging from the diffuser section of the jet pump will be at its saturation. Further subcooling of the liquid refrigerant prior to its entry into the jet pump 4 may be achieved by heat exchange with that portion of the refrigerant vapors emitted in the evaporator which are not recycled back to the jet pump.

Such a mode of incorporation of the jet pump in the absorption process has the following advantages:

1) Utilization of the refrigerant increases through recycling of part of its vapor. This leads to an improvement in the efficiency of the process.

2) Due to the increase in the amount of refrigerant vapor that it is necessary to generate in the generator G, to liquefy in the condenser C and to redissolve in the absorber A, these components will diminish in size accordingly, their cost will decrease, and the overall economics of the process will improve.

The simultaneous incorporation of liquid/gas jet pumps 2 and 4 in a single absorption system (as shown in Fig. 5) has a further advantage beyond the sum total of the advantages provided by the separate modes. As already stated, incorporation of a liquid/gas jet pump in the second mode leads to the reduction in the amount of refrigerant vapors which it is necessary to redissolve in the absorber. The performance of a liquid/gas jet pump is to some extent dependent on the relative mass flow rates of the fluids involved. Now, as a liquid/gas jet pump is expected to perform better at lower gas/liquid mass flow rates, the installation of a jet pump in the second mode should also improve the operation of the jet pump installed in the first mode.

Since an absorption system for refrigeration and heat pumping applications is expected to operate under varying conditions, liquid/gas jet pumps incorporated in such systems are also likely to operate under varying conditions. When properly designed, such pumps are able to self-adjust to such varying conditions, such that the ratio of the mass flow rates of the motive and the pumped fluids is expected to remain relatively constant. Beyond these conditions, it is possible to regulate the operation of the jet pumps through variation of nozzle and mixing chamber diameters by mechanical, pneumatic, etc. means.

The expected performance characteristics of conventional absorption systems and those incorporating a liquid/gas jet pump in the first mode have been compared on the basis of a simulation program. The results of such a comparison are summarized in Table I for two cases. In all cases the nominal capacity of the system is 15 tons refrigeration, and the pressure recovery of the jet pumps is 50%. In the first case full advantage is taken of the broadening of the span of the thermodynamic cycle for the increase in the coefficient of performance of the system, COP, and for the maximum decrease in the size and energy consumption of the solution pump, while in the second case this broadening of the thermodynamic cycle is utilized to elevate the temperature of the condenser, emphasizing the decrease in the size and cost of system components.

TABLE 1.  COMPARISON OF CASES

| | Conventional system | System with jet pump | |
|---|---|---|---|
| | | Case 1 | Case 2 |
| Generator temp. | 90 | 90 | 90 |
| Condenser temp. | 32 | 32 | 38 |
| Absorber temp. | 28 | 28 | 34 |
| Evaporator temp. | -3 | -3 | -3 |
| Generator area | 7.8 | 4.8 | 5.6 |
| Solution heat-exchanger area | 7.5 | 1.0 | 1.9 |
| Absorber area | 25.5 | 23.6 | 8.0 |
| Components, total area | 67.5 | 55.2 | 37.8 |
| COP | .568 | .637 | .654 |
| Circulation ratio | 4.68 | 2.43 | 2.94 |
| Pump discharge rate | 4667 | 2423 | 2930 |
| Pressure difference | 8 | 6.25 | 7.3 |
| Strong solution concentr. | .6195 | .7153 | .713 |
| Weak solution concentr. | .516 | .516 | .565 |

All temperatures are in degrees C, areas in square meters, flow rates in kgs per hour, and pressures in bars.

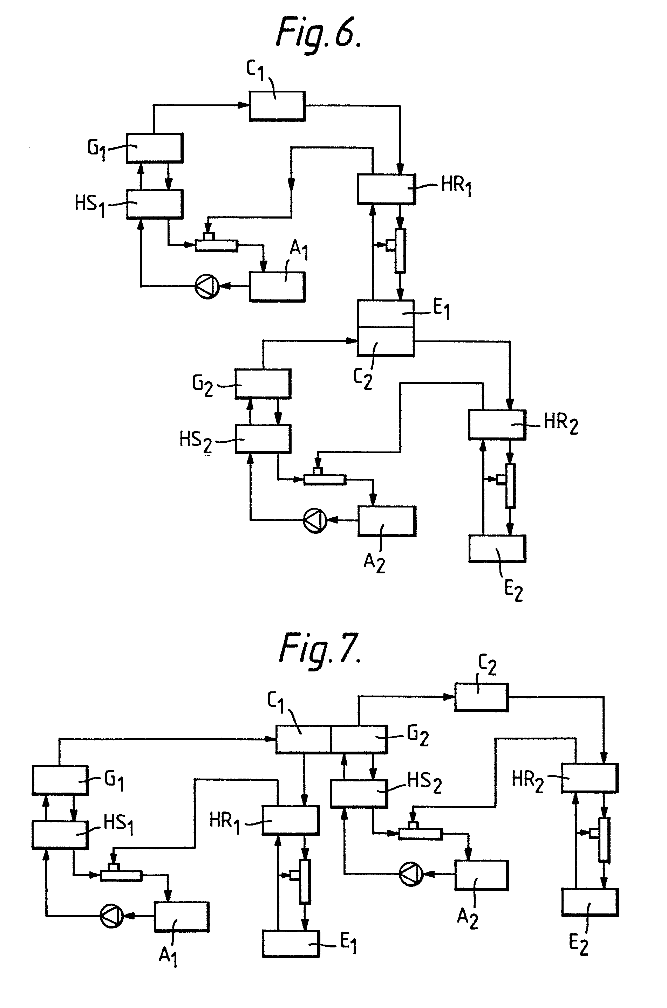

It should be obvious that the present invention is not limited to the single-stage and single-effect system schematically shown in Fig. 2.  It is the practice of the art to employ multistage absorption processes when evaporator-coil temperatures are required that are substantially lower than those achievable with a single-stage machine. A typical multi-stage absorption system is illustrated schematically by the two-stage installation of Fig. 6. While the components of each stage are essentially the same as those employed in a single stage machine, in the two-stage system the evaporator $E_1$ of the first stage serves as a heat sink for the condenser $C_2$ for the second one. With such a combination, condensation of refrigerant vapors in the condenser $C_2$ of the second stage is realized at temperatures substantially lower than would be possible with generally available means for single-stage condensation, e.g., cooling water or ambient air. Since each stage of the multistage machine contains absorption and evaporation components essentially similar to those of single-stage machines, it is obvious that implementation of the present invention in either or both modes of incorporation as described above would result in at least a sum total of benefits expected from the incorporation of the present invention in each stage of the machine.

It is also the practice of the art to seek better energy utilization or economy through the use of so-called "multiple-effect" systems. Such multiple combinations are numerous, one being illustrated by a double-effect machine shown in Fig. 7, in which the vapors of the refrigerant generated by boiling the strong solution in the generator $G_1$ of the first effect are condensed in the generator $G_2$

of the second effect, the heat of condensation being utilized for the generation of the vapors of the refrigerant in the second generator $G_2$ In such a configuration, one unit of energy, e.g. one unit of fuel invested in the generator $G_1$ of the first effect will produce about two units of refrigerant vapors as opposed to one unit of the latter in a single-effect system. Again the absorber and evaporator components of multi-effect systems are essentially similar to those of single-effect machines. Obviously, implementation of the present invention in either or both modes as described above should provide at least the same advantages as expected from their incorporation in a single-effect machine.

It should be noted that according to the terminology of the art, the term "effect" is to be understood as analogous to "stage", the difference being that while multi-stage arrangements facilitate lower refrigeration temperatures, multi-effect arrangements enhance overall efficiency.

CLAIMS:

1. An absorption system for refrigeration and heat pumping, including generator means in which refrigerant vapor is boiled off a strong solution, condenser means in which said refrigerant vapor is condensed into liquid refrigerant, evaporator means in which said liquid refrigerant is turned into refrigerant vapors, and absorber means in which said refrigerant vapors are absorbed in a weak solution, turning it into a strong solution, characterized by a liquid/gas jet pump means incorporated into the strong solution/weak solution cycle of said system, at a point upstream of said absorber means, in which liquid/gas jet pump means, the weak solution from said generator means, flowing through the nozzle of said jet pump means, is used as motive fluid to draw into said pump, and intimately mix with, refrigerant vapor emerging from said evaporator means, the original pressure of said motive fluid, reduced during the passage of the latter through said nozzle, being at least partly recovered in a pressure-recovery member of said jet pump means, whereby concentration of the refrigerant vapor in said strong solution is increased and the pressure difference between said absorber means and said generator means is held relatively low.

2. An absorption system for refrigeration and heat pumping, including generator means in which refrigerant vapor is boiled off a strong solution, condenser means in which said refrigerant vapor is condensed into liquid refrigerant, evaporator means in which said liquid refrigerant is turned into refrigerant vapors, and absorber means in which said refrigerant vapors are absorbed in a weak solution, turning it into a strong solution characterized by a liquid/gas pump means incorporated into the liquid refrigerant line of said system at a point upstream of said evaporator means, in which liquid/gas jet pump means the liquid refrigerant from said condenser means is used as motive fluid to draw into said pump, and intimately mix with, part of the refrigerant vapors produced in said evaporator means, the original pressure of said motive fluid, reduced during the passage of the latter through said nozzle, being at least partly recovered in a pressure-recovery member of said jet pump means, whereby the amount of refrigerant vapor to be produced in said generator means, to be liquefied in said condenser means and to be redissolved in said absorber means is reduced.

3. An absorption system for refrigeration and heat pumping including generator means in which refrigerant vapor is boiled off a strong solution, condenser means in which said refrigerant vapor is condensed into liquid refrigerant, evaporator means in which said liquid refrigerant is turned into refrigerant vapors, and absorber means in which said refrigerant vapors are absorbed in a weak solution, turning it into a strong-solution, characterized by a first liquid/gas jet pump means, incorporated into the strong solution/weak solution cycle of said system at a point upstream of said absorber means, in which first liquid/gas jet pump means the weak solution from said generator means, flowing through the nozzle of said jet pump means, is used as motive fluid to draw into said pump, and intimately mix with, refrigerant vapor emerging from said evaporator means, the original pressure of said motive fluid, reduced during the passage of the latter through said nozzle, being at least partly recovered in a pressure-recovery member of said jet pump means, whereby concentration of the refrigerant vapor in said strong solution is increased and the pressure difference between said absorber means and said generator means is held relatively low, further cmprising a second liquid jet pump means incorporated into the liquid refrigerant line of said system at a point upstream of said evaporator means, in which second liquid/gas jet pump means the liquid refrigerant from said condenser means is used as motive fluid to draw into said pump, and intimately mix with, part of the refrigerant vapors produced in said evaporator means, the original pressure of said motive fluid, reduced during the passage of the latter through said nozzle, being at least partly recovered in a pressure-recovery member of said jet pump means, whereby the amount of refrigerant vapor to be produced in said generator means, to be liquefied in said condenser means and to be redissolved in said absorber means is reduced, and the performance of the first liquid/gas jet pump located upstream of said absorber means is enhanced.

4.     The absorption system as claimed in claim 3, characterized by a multi-stage arrangement, in which the evaporator means of a former stage serves as a heat sink for the condenser means of a subsequent stage.

5.     The absorption system as claimed in claim 3, characterized by a multi-effect arrangement, in which the condenser means of a former effect of said arrangement serves as a heat source for the generator means of a subsequent effect of said arrangement.

# Fig.1.

PRIOR ART

# Fig.2.

PRIOR ART

*Fig.3.*

*Fig.4.*

*Fig.5.*

*Fig.6.*

*Fig.7.*